Europäisches Patentamt

European Patent Office

Office européen des brevets

(19)

(11) **EP 1 431 757 A1**

(12) **EUROPEAN PATENT APPLICATION**
published in accordance with Art. 158(3) EPC

(43) Date of publication:
**23.06.2004 Bulletin 2004/26**

(21) Application number: **02756039.0**

(22) Date of filing: **16.08.2002**

(51) Int Cl.$^7$: **G01N 27/26**

(86) International application number:
**PCT/RU2002/000394**

(87) International publication number:
**WO 2003/016895 (27.02.2003 Gazette 2003/09)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **20.08.2001 RU 2001123151**

(71) Applicant: **Popov, Andrey Veniaminovich
St. Petersburg, 195027 (RU)**

(72) Inventor: **Popov, Andrey Veniaminovich
St. Petersburg, 195027 (RU)**

(74) Representative: **Helino, Timo et al
Papula Oy,
P.O. Box 981
00101 Helsinki (FI)**

(54) **SENSOR FOR ANALYSING OXIDISING GAS, METHOD FOR PRODUCING SAID GAS AND METHOD FOR DETERMINING THE CONCENTRATION OF THE OXIDISING GAS**

(57) There is proposed an electrochemical sensor to determine the concentration of an oxidizing gas in the gas or liquid to be investigated, comprising a housing containing an electrolyte, a measuring electrode, and a counter-electrode containing carbon material having a potential of at least 750 mV when measured with respect to a hydrogen reference electrode in the same electrolyte, said measuring electrode and said counter-electrode being in contact with the electrolyte. The invention relates also to a method of manufacturing of said electrochemical sensor and a method of determining the concentration of an oxidizing gas in the gas to be investigated.

## Description

Field of the Invention

The invention relates to electrochemical sensors for analyzing the concentration of an oxidizing gas, such as $O_2$, $O_3$, $NO_2$, in the gaseous media to be investigated. The sensor, or primary measuring transducer, generates an electric current signal dependent on the concentration of the oxidizing gas to be measured in the gaseous medium investigated. The sensor can be used also for analyzing the concentration of an oxidizing gas dissolved in a liquid.

Prior Art

A known sensor described in US Patent No. 5,538,620, G01N 27/26, 1996, comprises a housing, containing electrolyte, a measuring electrode and a counter-electrode. The counter-electrode contains a carbon material having a high specific surface (more than 40 $m^2/g$) and bearing at its surface some electrochemically active surface compounds which are capable of reversible reduction/oxidation, such as quinone/quinol. The concentration of the electrochemically active surface compounds may achieve a value of 3 mmol/g. When an oxidizing gas is contained in the gas being investigated, its reduction at the measuring electrode occurs and electric current appears between the electrodes, which current shall be registered to determine the gas-oxidizer concentration. The above-mentioned current causes increase in the positive potential, i.e. anodic polarization, of the counter-electrode, which is compensated by reaction of depolarization. When oxidizing gases electrochemically reduced at the measuring electrode are analyzed, the reaction of depolarization consists mainly in the oxidation of the electrochemically active surface compounds.

According to the above patent, after a certain period of continuous operation of the sensor, the complete oxidation of the electrochemically active surface compounds at the counter-electrode occurs, so that the sensor operation shall be interrupted in order to replace or regenerate the sensor. The regeneration of the sensor is carried out by applying to its electrodes a potential difference which shall have a magnitude required for the regeneration and be opposite in sign with respect to the potential difference appearing between the electrodes during the sensor operation. During the regeneration, reaction of reduction of the oxidized electrochemically active surface compounds occurs at the counter electrode, whereupon the sensor is again capable of measuring the oxidizing gas concentration.

The disadvantage of the above-mentioned sensor consists in the relatively limited time period during which it can operate continuously, resulting in the necessity to interrupt the operation of the sensor in order to regenerate it. The amount of electrochemically active surface compounds at carbon materials which have not been subjected to special processing is insignificant, i. e. less than 0.1 mmol/g. As is known, the amount of electrochemically active surface compounds at the surface of carbon materials may be increased up to 0.5 to 3 mmol/g by processing the carbon material. However, this complicates the manufacture of the sensor and makes it more expensive. Moreover, even with the maximum amount of electrochemically active surface compounds, the operational mode of the sensor is periodic, so that a periodic regeneration is required to restore its serviceability.

The sensor described as prior art in US patent No.5,538,620 represents the prior art nearest to the present invention. This known sensor contains a housing, electrolyte, a measuring electrode, and a counter-electrode (associated electrode) in relation to which the measuring electrode is polarized, the measuring electrode and counter-electrode being in contact with the electrolyte.

The counter-electrode contains a chemically pure unoxidized carbon material having a high specific surface (1,000 to 1,700 $m^2/g$) and substantially free of any electrochemically active surface compounds. The gas to be investigated is ionized at the measuring electrode. In particular, the oxidizing gas is electrochemically reduced at the measuring electrode. The current arising in an external measuring circuit creates a positive potential at the counter-electrode when the gas is being reduced at the measuring electrode. The depolarizing reaction (depolarizing process) which compensates for the accumulation of charges at the counter-electrode is represented by the charging of the double electric layer at the counter-electrode/electrolyte interface. According to the description of the above patent, a process of charging the double electric layer takes place at the counter-electrode during the analysis, the sensor service life being limited by the time of period required for charging the double electric layer.

Thus, during the analysis, the counter-electrode potential is always within the limits of the double-layer area of potentials.

By the double-layer area is meant the range of potentials within the limits of which the charging of the double electric layer at the electrode/electrolyte interface mainly occurs during the polarization by an external current and in which substantially no Faraday's processes of electrochemical oxidation or reduction take place. Reduction processes occur in an area closer to the cathode potential, with respect to the double-layer area, while oxidation processes occur in an area closer to the anode potential with respect to the double-layer area (the concept of "double-layer area of potentials " is well known in electrochemistry; in particular, it is used in electrochemistry of carbon materials. See, e.g., E. A. Ponomarenko, A. N. Frumkin, R. Kh. Burshtein. "Dependence of the Carbon Electrode Potential on pH in a Solution Under Isoelectric Conditions." News of the USSR Academy of Science, Chemistry, No.9,1963) [1]. The double-layer area of potentials of carbon materials in a water electrolyte lies within the limits of 200 to 600 mV with respect to the hydrogen reference electrode in the same solution.

The method of manufacturing the above sensor includes placing said electrodes in the housing containing electrolyte.

Known is a method of determining concentration of oxidizing gases (cf US Patent No.5,538,620) with the use of a sensor having a housing containing an electrolyte and accommodating a measuring electrode and a counter-electrode containing a carbon material, the method including connecting the sensor to an external measuring circuit, bringing the gas to be investigated in contact with the measuring electrode of the sensor and registering the current circulating between the electrodes by means of appropriate measuring equipment.

The disadvantage of this known method consists in the rather short service life of the sensor because the depolarizing ability provided by charging the double electrical layer, even on a carbon material having the high specific surface of 1,000 to 1,700 $m^2$/g mentioned above is many times less than the depolarizing ability of electrochemical reactions (Faraday's processes) usually used as depolarizing reactions at the counter-electrode of electrochemical sensors. Besides, when the double electric layer is charged, the counter-electrode potential is gradually shifted because of the electron flow from the counter-electrode to the measuring electrode during the reduction of the analyzed oxidizing gas at the measuring electrode. The shift of the counter-electrode potential is in inverse proportion to the capacity of the double electrical layer and is directly proportional to the quantity of electricity passed during the measurement (see A. L. Rotinyan et al. " Theoretical Electrochemistry ", Leningrad, 1981, page 229). The shift of the counter-electrode potential during charging the double electrical layer can reach a value of 400 mV. It results in corresponding alteration of the measuring electrode potential and in instability of the output signal or requires introduction of an additional reference electrode, which makes the electric circuit more complicated.

The principal object of the invention is to create a sensor for determining the concentration of an oxidizing gas in the gas to be investigated, which sensor has a long service life and is capable of continuous operation, as well as a method of manufacturing said sensor and a method of determining the oxidizing gas concentration in the gas to be investigated.

Summary of the Invention

With the above technical effect in view, there is proposed a sensor including a housing containing an electrolyte, a measuring electrode and a counter-electrode containing a carbon material, the measuring electrode and the counter-electrode being in contact with the electrolyte, wherein, according to the invention, the counter-electrode has a potential of at least 750 mV when measured with respect to a hydrogen reference electrode in the same electrolyte.

The counter-electrode potential can be measured by conventional electrochemical methods. Hereinbelow the counter-electrode potentials are indicated with respect to the hydrogen reference electrode placed in the same electrolyte without the reference electrode being mentioned.

The invention is based on the fact that, with the counter-electrode potential being at least 750 mV, the compensating (depolarizing) reaction does not involve charging the double electric layer at the counter-electrode/electrolyte interface or in the reversible oxidation/reduction of electrochemically active surface compounds but consists in direct electro-chemical oxidation of the carbon material of the counter-electrode. This oxidation provides practically unlimited continuous operation of the sensor and a stable output signal, with a minimum quantity of carbon material being used.

Preferably the electrolyte has a pH value of at least 9.

Preferably the counter-electrode carbon material has a specific surface of 0.1 to 3,000 $m^2$/g. In some cases, the counter-electrode carbon material shall preferably have a specific surface of 0.1 to 3,000 $m^2$/g, or more preferably 0.1 to 100 $m^2$/g.

The counter-electrode carbon material is preferably selected from the group including graphite, carbon black, activated carbon, charcoal, pyrocarbon, and mixtures thereof.

The counter-electrode carbon material is preferably made in the form selected from the group including powder, paste, colloid carbon, fabrics, felt, carbon fibers, granules, tablets, rods, and various combinations thereof.

The measuring electrode preferably contains carbon and/or a metal selected from the group including gold, silver, a metal of the eighth group, and mixtures thereof.

The sensor preferably contains also a gas-diffusion membrane separating the electrodes and the electrolyte from the gas or liquid to be investigated.

The sensor preferably contains also a porous separator or a ion-exchange membrane located between the electrodes.

The sensor preferably contains also a reference electrode.

With the above-mentioned technical effect in view, there is also proposed a method of manufacturing an electrochemical sensor for measuring the concentration of oxidizing gases in the gas or liquid to be investigated, wherein the measuring electrode and the counter-electrode containing carbon material are placed in a housing containing an electrolyte, in which method, according to the invention, a potential of at least 750 mV with respect to a hydrogen reference electrode in the same electrolyte is created on the carbon material of the counter-electrode.

The provision of the above-mentioned potential on the carbon material of the counter-electrode can be realized by using electrolyte having a pH value of at least 9.

The provision of said potential on the carbon material of the counter-electrode can also be realized by connecting the sensor to an external voltage source and exposing it to air before starting the analysis.

With the above-mentioned technical result in view, there is further proposed a method of determining the concentration of a gas-oxidizer in the gas or liquid to be investigated by using an electrochemical sensor comprising a housing containing an electrolyte and accommodating a measuring electrode and a counter-electrode containing carbon material, connecting the sensor to an external measuring circuit creating a potential difference between the measuring electrode and the counter-electrode, bringing the gas to be investigated in contact with the measuring electrode of the sensor and registering the current circulating between the electrodes, wherein, according to the invention, a potential of at least 750 mV when measured with respect to a hydrogen reference electrode in the same electrolyte is created on the carbon material of the counter electrode.

Description of the Preferred Embodiments

The proposed sensor includes a housing containing an electrolyte, and a measuring electrode and a counter-electrode in contact with the electrolyte. The housing is made of any chemical resistant material, e. g. of plastic. It is capable of accommodating the electrolyte and both the electrodes and permits the gas being investigated to be supplied to the measuring electrode, e.g. with the help of holes provided at the top of the housing. The electrolyte is either a solution of a substance having ionic conductivity, such as salt, acid or alkali, or a gel obtained based on such a solution included into a solid matrix, e.g., in a polymer. Solutions of $K_2CO_3$, KOH or $H_2SO_4$, or gels of these solutions can be used as the electrolyte. The use of an aqueous electrolyte having a high buffer capacity is preferable. Generally aqueous electrolytes of various structures and having various pH values can be used because the oxidation of the carbon material of a counter-electrode having a potential of at least 750 mV occurs at the same rate irrespective of the composition and pH value of the electrolyte.

By the counter-electrode potential is meant a potential measured on the hydrogen scale, i.e. with respect to a hydrogen reference electrode in the same electrolyte. For this purpose, the hydrogen reference electrode is submerged in the sensor electrolyte and the potential difference between the counter-electrode and the hydrogen electrode is measured.

Preferably the electrolyte has a pH value of at least 9. This pH value of the electrolyte can be obtained if it contains a base which provides a concentration of $OH^-$ ions of at least $10^{-5}$ mol/1. An example of such an electrolyte is a 0.01 M KOH solution having a pH value of 12. If such an electrolyte is used, the potential of the pure carbon material of the counter-electrode, after it has been wetted with the electrolyte in the presence of air (the immersion potential) acquires a value of at least 750 mV.

The specific surface of the counter-electrode carbon material may vary from 0.1 to 3,000 $m^2/g$. The choice of the specific surface of the counter-electrode carbon material depends on the particular analytical task. If the carbon material has a high specific surface, this increases the oxidizability of the anode and reduces the polarizability of the counter-electrode, thus stabilizing the potential of the counter-electrode and hence that of the measuring electrode. Hence, such a material shall preferably be used for sensors using large current signal values which are usually necessary for the analysis of gases with a high oxidizing gas content. If the carbon material has a relatively small specific surface, in particular 0.1 to 1,000 $m^2/g$, preferably 0.1 to 100 $m^2/g$, this weakens the background processes, i.e. increases the signal-to-noise ratio. Such a carbon material shall preferably be used for sensors using small current signal values which are usually employed for the analysis of gases with a low oxidizing gas content.

The measuring electrode is preferably manufactured in the form of a porous conductive film made of a material which is catalytically active with respect to the analyzed gas, e.g. of platinum in case of oxygen determination. The film may be put on a substrate. The measuring electrode is placed so as to ensure its contact with the electrolyte and with the gas to be investigated, preferably at the electrolyte/gas interface.

Prior to the assembly of the sensor, the counter-electrode carbon material preferably represents pure unoxidized carbon which substantially does not contain electrochemically active surface compounds. It is preferable to use pure enough carbon materials with small ash content because this reduces the background processes and improves the signal stability. It is known that some small amount of oxygen is present in a manufactured carbon material; also, oxygen is adsorbed, spontaneously and without any treatment, on the surface of carbon materials when they contact air, forming electrochemically active surface compounds after being wetted with electrolyte. However, the amount of such surface compounds is small and they do not significantly affect the electrode behaviour. Therefore, the counter-electrode carbon material may be unoxidized and substantially free of electrochemically active surface compounds.

Carbon materials of any known type, such as graphite, black carbon, various types of pyrocarbon, colloid carbon, various activated and non-activated carbon fibers, activated carbon, non-activated char, foamed carbon, etc., may be used. The possibility to use carbon material of any known type in the counter-electrode is due to the fact that any carbon material is electrochemically oxidized in case of anodic polarization more positive than the double-layer area. As a rule, activated carbon is the easiest to oxidize by anodic polarization, while graphite is the most difficult to oxidize. The rate and degree of oxidation by anodic polarization depend on the type of the carbon material, the composition of the electrolyte, the potential and other factors; therefore the type of the carbon material shall be selected according to the analytical task.

The counter-electrode carbon material can have any form suitable for a specific design of the sensor, e.g. be in the form of powder, paste, fabrics, felt, carbon fibers, granules, tablets, rods, or various combinations thereof.

A gas-diffusion membrane permeable to gases and impermeable to liquids and solid particles and preferably having the form of polymer, e.g. PTFE, film, may be installed between the gas to be investigated and the measuring electrode. The gas-diffusion membrane serves to provide the proportionality between the output signal of the sensor and the content of the oxidizing gas irrespective of small short-term oscillations of the investigated gas flow. It also protects the electrolyte from drying and contamination by various impurities which may exist in the analyzed gas. When analyzing a gas dissolved in a liquid, the membrane is also used for separating the sensor electrolyte from the liquid. The gas-diffusion membrane may also form the substrate for a measuring electrode manufactured in the form of a film applied onto the membrane.

An ion-exchange membrane or a separator made of nonconductive porous, preferably polymeric, film capable of transmitting ions, or of nonconductive grid may be placed between the electrodes of the sensor. The separator or the ion-exchange membrane prevent possible shorting between the electrodes and allow producing sensors of very small size.

In case of the necessity to make especially high precision measurements, the sensor shall preferably further contain a reference electrode the potential of which remains constant throughout the sensor operation. With such a sensor the analysis accuracy is increased because the three-electrode configuration of measurements provides a still more stable potential at the measuring electrode.

The sensor is produced as follows.

The measuring electrode and the counter-electrode containing carbon material are placed in a housing containing electrolyte. A potential of at least 750 mV with respect to the hydrogen reference electrode in the same electrolyte is created at the counter-electrode carbon material.

The required counter-electrode potential of at least 750 mV can be created by using electrolyte having a pH value of at least 9. When immersed in such an electrolyte, the counter-electrode carbon material immediately acquires the required potential (immerse potential) (see M. R. Tarasevich. "Electrochemistry of Carbon Materials ". M., 1984).

Besides, the necessary potential of the counter-electrode may be created by exposing the sensor to a gas containing an oxidizing gas, e.g. to air, after having connected the measuring electrode and counter-electrode of the sensor to an external voltage source so that the reaction of reducing the oxidizing gas, e.g. atmospheric oxygen, occurs at the measuring electrode and the anodic polarization of the counter-electrode takes place. Simultaneously, the background current in the sensor increases and the oxygen dissolved in the electrolyte is reduced, i.e. the metrological performance of the sensor is improved. In this embodiment, the counter-electrode shall preferably have a specific surface of less than 1,000 $m^2/g$ (more preferably less than 100 $m^2/g$). The use of a counter-electrode having rather a small specific surface of carbon material makes it possible to create a potential of at least 750 mV very fast because with a small counter-electrode specific surface, the capacity of the double electric layer at the electrode/electrolyte interface is also small so that the counter-electrode potential quickly achieves the required level after the oxidizing gas reduction at the measuring electrode begins.

The counter-electrode potential of at least 750 mV can also be created before the sensor is assembled, by applying to this electrode a potential from an external voltage source, whereupon the voltage source is disconnected and the sensor is assembled with the charged counter-electrode.

The sensor operates as follows.

The measuring electrode is polarized with respect to the counter-electrode by an external voltage source up to a potential required to reduce the analyzed oxidizing gas; in particular, for oxygen this potential is usually from -500 to -800 mV. The sensor is installed in the analyzed gas or in a liquid with the analyzed gas dissolved therein. Then the measuring electrode and the counter-electrode are connected to an external measuring circuit having means for measuring the current, e.g. an ammeter. The gas comes into the sensor, e.g. through top holes, by diffusion or with the aid of some gas pumping facilities, diffuses through the membrane and gets in contact with the measuring electrode. If the oxidizing gas to be determined is present in the analyzed gas, it will be reduced at the measuring electrode which acquires in such a case some positive charge. This charge is compensated for by the electron flow from the counter-electrode to the measuring electrode through the external measuring circuit which produces a current signal registered by the measuring means, e.g. an ammeter. For instance, when analyzing oxygen, the following reaction occurs at the measuring electrode:

$$O_2 + 4H^+ + 4e^- = 2H_2O$$

in an acid electrolyte or

$$O_2 + 2H_2O + 4e^- = 4OH^-$$

in an alkaline or neutral electrolyte.

The sensor may be used for the analysis of other oxidizing gases in the same way as for the analysis of oxygen since the depolarizing process at the counter-electrode will be the same, consisting always in the electrochemical oxidation of the carbon material.

Because the electrons consumed during the reaction pass from the counter-electrode to the measuring electrode through the external measuring circuit, the counter-electrode positive potential (anodic polarization) is increased. With a counter-electrode potential lower than 750 mV with respect to the hydrogen electrode, as in known sensors, depolarizing (polarization compensating) reactions take place, which reactions consist in charging the double electrical layer capacitance if pure carbon materials are used or in oxidation of electrochemically active surface compounds on a pre-treated carbon material. However, these reactions have a relatively small capacity, which is exhausted rather fast, so that the anodic polarization of the counter-electrode occurs very quickly. The shift of the counter-electrode potential results in a shift of the measuring electrode potential and in instability of the signal. The small electrochemical equivalent (no more than 3 mmol/g, or 300 C per 1 g of carbon material) of the used depolarizing reactions limits the duriation of continuous operation of the sensor and results in the necessity to shut down the sensor periodically and to regenerate it by the methods described in the nearest prior art reference indicated above.

However, if the counter-electrode carbon material has a potential of at least 750 mV with respect to the hydrogen electrode, the depolarizing reactions occuring during the analysis and limiting a further shift of the counter-electrode potential towards the anode consist in direct oxidation of carbon. These reactions have a high electrochemical equivalent, amounting up to 33,000 C per 1 g of carbon, and increase many times the duration of continuous operation of the sensor as compared to the known sensors.

In an acid electrolyte, the following reactions mainly occur:

$$2xC + H_2O = 2C_xO + 2H + + 2e^- \qquad (1)$$

$$C + 2H_2O = CO_2 + 4H^+ + 4e^- \qquad (2)$$

$$C + H_2O = CO + 2H^+ + 2e^- \qquad (3)$$

In an alkaline electrolyte, the following reactions mainly occur:

$$xC + 20H^- = C_xO + H_2O + 2e^- \qquad (4)$$

$$C + 60H^- = CO_3^{2-} + 3H_2O + 4e^- \qquad (5)$$

During the initial operation of the proposed sensor, reactions (1) or (4) of oxidation of the carbon surface predominate, in which reactions $C_xO$ designates the oxidized surface. During the subsequent analysis, the main reactions are reactions (2) and (5) of carbon dioxide formation. The long service life of the sensor is ensured mainly by reactions (2) or (5) because they have a high electrochemical equivalent. Calculations show that, with a current signal of 20 μA and a counter-electrode weight of 10 g (as in the prior art reference), reaction (2) or (5) will ensure a continuous (without regeneration) service life of the sensor of more than 500 years, which exceeds many times the continuous service life of known devices having the same counter-electrode weight. This increase is due to the use of the electrochemical oxidation of carbon material, characterized by a relatively high Faraday's capacity, instead of the oxidation of electrochemically active surface compounds, characterized by a relatively low Faraday's capacity. The counter-electrode potential and, consequently, that of the measuring electrode are varying slowly during the analysis providing a stable sensor signal.

Thus, it is possible to use both pure carbon material and carbon material containing electrochemically active surface compounds in the proposed sensor without substantially affecting the sensor service life. However, it is preferable to use a carbon material free of electrochemically active surface compounds because in such a case no pre-treatment of the carbon material is required; besides, the Faraday's capacity of oxidation of carbon material which has not been preliminary oxidized is somewhat higher. The low cost of the counter-electrode carbon material that has not been preliminary treated makes it possible to manufacture a rather inexpensive sensor.

To confirm the possibility to implement the invention, several sensors have been manufactured according to the invention and their characteristics have been measured.

Example 1.

The sensor contains a stainless steel housing, a platinum measuring electrode of 2.5 mm in diameter applied as a thin layer onto a PTFE gas-diffusion membrane 30 μ thick, a separator made of porous polypropylene, and electrolyte (0,1 M KOH, pH=13). The counter-electrode has a weight of 0.25 g and is made of commercial fabric composed of activated carbon fibers having a specific surface of 1,200 m$^2$/g, which fabric has not been subjected to any treatment, including oxidizing. The substantially complete absence of electrochemically active surface compounds on the used carbon fabric was confirmed by recording a charging curve in the area of double electrical layer. The obtained value of integral capacity of 115 F/g was found to correspond to the integral capacity of carbon materials substantially free of electrochemically active surface compounds. The initial counter-electrode potential after immersion was 830 mV with respect to the hydrogen reference electrode in the same electrolyte. After the sensor was assembled, a voltage of -550 mV (with respect to the counter-electrode) was applied to the measuring electrode and the current signal in the external measuring circuit was registered. The signal was directly proportional to the oxygen content in the gas, the signal value being 1,2 μA during measurements in the air. During three years of measurements the signal value decreased by 5 %, i.e. the sensor operation was stable. On completion of the analysis, the sensor was disassembled, and the counter-electrode potential with respect to the hydrogen reference electrode in the same electrolyte was measured. This potential was 970 mV, i.e. was more positive in the area of potentials of anodic oxidation of carbon materials than 750 mV, having shifted insignificantly with respect to the start of the analysis.

Example 2.

The sensor is manufactured as in Example 1, except that the counter-electrode is made of activated carbon powder having a weight of 8 mg, i.e. 31 times less than in Example 1. As the electrolyte, 3 M KOH solution (pH=14.5) was used. The initial and final potentials of the carbon material were more positive than 750 mV.

A voltage of -700 mV with respect to the counter-electrode was applied to the measuring electrode. After 25 months of measurements, the counter-electrode weight decreased by 2 mg. This weight loss shows that the carbon material was electrochemically oxidized in alkaline electrolyte mainly to carbonate ion according to reaction (5). The duration of continuous operation of the sensor with the counter-electrode weight of 0.25 g, as in Example 1, would be not less than:

  25 months x 31 = 775 months (i. e. about 65 years).

Example 3.

A sensor has a fluoroplastic housing, a measuring electrode made of porous platinum of 6 mm in diameter, a separator made of porous polypropylene, a counter-electrode made of graphite powder of 0.4 g in weight having a specific surface of about 20 m$^2$/g, and electrolyte consisting of 85 % orthophosphoric acid (the pH value is about zero).

After immersion, the counter-electrode potential was + 280 mV, i.e. was in the double-layer area of potentials. Before starting the analysis, the sensor had been exposed to the air for 48 hours, with the preset potential of the measuring electrode of -200 mV with respect to the counter-electrode provided by an external voltage source. During 48 hours the counter-electrode potential shifted to 920 mV, i.e. to the area of anodic oxidation. Simultaneously, a decrease in the background current was observed in the sensor. Then a measuring electrode potential of -500 mV with respect to the counter-electrode was set and the analysis started. During two years of measurements the sensor current in the air decreased by 5.5 % while the counter-electrode potential shifted to 1,210 mV, remaining stable.

Industrial Applicability

Sensors made according to the invention are simple and inexpensive to produce, provide a stable signal and ensure a long duration of continuous operation.

**Claims**

1. An electrochemical sensor for determining the concentration of an oxidizing gas in a gas or liquid to be investigated, comprising a housing containing an electrolyte, a measuring electrode, and a counter-electrode containing carbon material, said measuring electrode and said counter-electrode being in contact with said electrolyte, **characterized in that** said counter-electrode has a potential of at least 750 mV when measured with respect to a hydrogen reference electrode in the same electrolyte.

2. A sensor according to claim 1, **characterized in that** said electrolyte has a pH value of at least 9.

3. A sensor according to claim 1 or 2, **characterized in that** the carbon material of said counter-electrode has a specific surface of 0.1 to 3,000 m$^2$/g.

4. A sensor according to claim 3, **characterized in that** the carbon material of said counter-electrode has a specific surface of 0.1 to 1,000 m$^2$/g, preferably of 0.1 to 100 m$^2$/g.

5. A sensor according to any of claims 1 to 4, **characterized in that** the carbon material of said counter-electrode is selected from the group including graphite, carbon black, activated carbon, unactivated char, pyrocarbon, and mixtures thereof.

6. A sensor according to any of claim 1 to 5, **characterized in that** the carbon material of said counter-electrode is made in the form selected from the group including powder, paste, colloid carbon, fabric, felt, carbon fibers, granules, tablets, rods, and combinations thereof.

7. A sensor according to any of claims 1 to 6, **characterized in that** said measuring electrode contains carbon and/or a metal selected from the group including gold, silver, a metal of the eighth group, and mixtures thereof.

8. A sensor according to any of claims 1 to 7, **characterized in that** it further comprises a gas-diffusion membrane separating the electrodes and the electrolyte from the gas or liquid to be investigated.

9. A sensor according to any of claims 1 to 8, **characterized in that** it further comprises a porous separator or an ion-exchange membrane placed between the electrodes.

10. A sensor according to any of claims 1 to 9, **characterized in that** it further comprises a reference electrode.

11. A method of manufacturing an electrochemical sensor for determining the concentration of an oxidizing gas in the gas or liquid to be investigated, wherein a measuring electrode and a counter-electrode containing carbon material are placed within a housing containing an electrolyte, **characterized in that** a potential of at least 750 mV with respect to a hydrogen reference electrode in the same electrolyte is created on the carbon material of the counter-electrode.

12. A method according to claim 11, **characterized in that** the creation of said potential on the carbon material of the counter-electrode is carried out by using electrolyte having a pH value of at least 9.

13. A method according to claim 12, **characterized in that** the creation of said potential on the carbon material of the counter-electrode is carried out by connecting the sensor to an external voltage source and exposing it to air before starting the analysis.

14. A method according to claim 13, **characterized in that** the carbon material of the counter-electrode has a specific surface of 0.1 to 1,000 $m^2/g$, preferably from 0.1 to 100 $m^2/g$.

15. A method of determining the concentration of an oxidizing gas in the gas or liquid to be investigated by using an electrochemical sensor comprising a housing containing an electrolyte and accommodating a measuring electrode and a counter-electrode containing carbon material, connecting said sensor to an external measuring circuit, creating a potential difference between said measuring electrode and said counter-electrode by means of an external voltage source, bringing the gas to be investigated in contact with said measuring electrode of said sensor and registering the current circulating between the electrodes, **characterized in that** a potential of at least 750 mV when measured with respect to a hydrogen reference electrode in the same electrolyte is created on the carbon material of the counter-electrode.

**EP 1 431 757 A1**

## INTERNATIONAL SEARCH REPORT

International application No.

PCT/RU 02/00394

**A. CLASSIFICATION OF SUBJECT MATTER**

G01N 27/26

According to International Patent Classification (IPC) or to both national classification and IPC МПК-7:

**B. FIELDS SEARCHED**

Minimum documentation searched (classification system followed by classification symbols) МПК-7:

G01N 27/26,27/403,27/406

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2106621 C1 (MST MIKRO-SENSOR-TEKHNOLOGI GMBKH) 10.03.1998 | 1-15 |
| A | US 5958214 A (MST MICRO-SENSOR-TECHNOLOGIE GMBH) Sep. 28, 1999 | 1-15 |
| A | GB 2228327 A (MATSUSHITA ELECTRIC WORKS LIMITED) 22.08.1990, the abstract, fig. 1 | 1-15 |
| A | US 5085760 A (MOHAMMED RAZAQ et.al.) Feb. 4, 1992 | 1-15 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 November 2002 (27.11.2002) | 05 December 2002 (05.12.2002) |

| Name and mailing address of the ISA/ | Authorized officer |
|---|---|
| **ISA/RU** | Н. Лятенна |
| Facsimile No. | Telephone No. |

Form PCT/ISA/210 (second sheet) (July 1992)

9